# EUROPÄISCHE PATENTANMELDUNG

(11) **EP 1 036 992 A2**
(43) Veröffentlichungstag der Anmeldung: **20.09.2000**
(21) Anmeldenummer: 00105837.9
(22) Anmeldetag: 20.03.2000
(51) Int. Cl.: F24D 3/16

(54) **Herstellungsverfahren zur Herstellung von Wärmetauscherelementen und Wärmetauschelement**

(30) Priorität: 18.03.1999 DE 19912066
(71) Anmelder: Mertingk, Wolfgang, 22393 Hamburg (DE)
(72) Erfinder: Mertingk, Wolfgang, 22393 Hamburg (DE)
(74) Vertreter: Mahler, Peter, Dipl.-Phys.

(57) **Zusammenfassung**

Die Erfindung betrifft ein Herstellungsverfahren zur Herstellung von Wärmetauscherelementen, insbesondere für Kühl- und Heizdecken, mit Wärmeübertragungsflächen, Kühl- oder Heizmedium führenden Leitungen und rohrförmigen, gebogenen Bereichen, das aus den Schritten besteht:
(a) Herstellung eines Strangpreßprofils mit mindestens einem ebenen Schenkel als Wärmeübertragungsfläche und einem geschlossenen rohrförmigen Bereich zur Aufnahme eines Kühl- oder Heizmediums;
(b) Festlegung der Länge und des Abstandes der Wärmeübertragungsflächen;
(c) Entfernen der Schenkel des Strangspreßprofils im Bereich zwischen den Wärmeübertragungsflächen;
(d) Biegen des verbleibenden Rohres im Bereich zwischen den Wärmeübertragungsflächen.

Das erfindungsgemäße Verfahren ermöglicht die einstückige Herstellung von Wärmetauscherelementen, bei dem eine annähernd beliebige Leitungsführung ermöglicht wird. Die Lage und Größe der Wärmeübertragungsflächen kann individuell gewählt werden. Des weiteren wird ein nach dem erfindungsgemäßen Verfahren hergestelltes Wärmetauscherelement vorgeschlagen.

## Beschreibung

Die Erfindung betrifft ein Herstellungsverfahren zur Herstellung von Wärmetauscherelementen, insbesondere für Kühl- und Heizdecken, mit Wärmeübertragungsflächen, kühl- oder heizmediumführenden Leitungen und rohrförmigen, gebogenen Bereichen sowie Wärmetauscherelemente, bestehend aus einer Rohrleitung für die Aufnahme eines Kühl- oder Heizmediums und aus voneinander beabstandeten Wärmeübertragungsflächen.

Um Wärmelasten in Räumen abzuführen, werden häufig abgehängte Kühldecken eingesetzt, in die einzelne Kühlelemente integriert sind. Solche Decken müssen vielerlei Ansprüchen gerecht werden. Zum einen müssen die im Raum anfallenden Wärmelasten, wie sie beispielsweise durch Beleuchtung, EDV-Geräte und den Aufenthalt von Personen anfallen, abgeführt werden. Zum anderen müssen die Decken akustischen Aufgaben gerecht werden. Innerhalb der Deckenflächen besteht deshalb nicht die Möglichkeit, unbegrenzt zusammenhängende Kühl- oder Heizflächen anzuordnen.

In der Praxis wird dieses Problem in der Regel dadurch gelöst, daß vorgefertigte Standardelemente, häufig aus Aluminium-Strangpreßprofilen, mit Aufnahmen für Rohrleitungen aus Kupfer versehen werden. Die Rohrleitungen führen ein Kühl- oder Heizmedium, in der Regel Wasser.

Das Strangpreßprofil wird in der gewünschten Größe der einzelnen Wärmeübertragungsflächen abgelängt und mit einer Rohrleitung versehen. Die Rohrleitung läßt sich im Bereich außerhalb der Wärmeübertragungsflächen im üblichen Rahmen biegen, so daß eine Anordnung der Wärmeübertragungsflächen gemäß Vorgabe realisiert werden kann.

Diese Erstellung von Kühldecken hat jedoch den Nachteil, daß Kupferrohr teuer ist und die Wärmeübertragung zwischen dem Kupferrohr und dem Aluminium-Strangpreßprofil häufig nicht befriedigend realisiert werden kann oder durch relativ aufwendige Maßnahmen sichergestellt werden muß.

Die Herstellung von Strangpreßprofilen, insbesondere aus Aluminium, die einen rohrförmigen Bereich aufweisen, ist grundsätzlich möglich. Die Verbindung der einzelnen Abschnitte durch separate Leitungen ist jedoch fehleranfällig, da durch die Vielzahl von Verbindungsstellen Undichtigkeiten auftreten können.

Es ist Aufgabe der vorliegenden Erfindung, ein Herstellungsverfahren für Wärmetauscherelemente vorzustellen, das eine freie Auswahl der Größe und Anordnung von Wärmetauscherflächen ermöglicht, ohne separate oder mehrteilige Rohrleitungen erforderlich zu machen.

Erfindungsgemäß wird ein Herstellungsverfahren zur Herstellung von Wärmetauscherelementen, insbesondere für Kühl- und Heizdecken, mit Wärmeübertragungsflächen, kühl- oder heizmediumführenden Leitungen und rohrförmigen, gebogenen Bereichen mit folgenden Schritten vorgeschlagen:
a) Herstellung eines Strangpreßprofils mit mindestens einem ebenen Schenkel als Wärmeübertragungsfläche und einem geschlossenen rohrförmigen Bereich zur Aufnahme eines Kühl- oder Heizmediums;
b) Festlegung der Länge und des Abstandes der Wärmeübertragungsflächen;
c) Entfernen der Schenkel des Strangpreßprofils im Bereich zwischen den Wärmeübertragungsflächen;
d) Biegen des verbleibenden Rohres im Bereich zwischen den Wärmeübertragungsflächen.

Das erfindungsgemäße Verfahren ermöglicht es, einstückige Wärmeübertragungselemente herzustellen, die Wärmeübertragungsflächen aufweisen, und bei denen die Wärmeübertragungsflächen durch Rohrleitungen verbunden sind.

Die Wärmeübertragungselemente bestehen aus einem in beliebiger Länge herstellbaren Strangpreßprofil, das mindestens einen, vorzugsweise zwei ebene Schenkel aufweist, die als Wärmeübertragungsflächen dienen. Weiterhin weist das Strangpreßprofil einen geschlossenen, rohrförmigen Bereich auf, der als Rohrleitung zur Aufnahme eines Kühl- oder Heizmediums dient.

Gemäß den äußeren Vorgaben wird zunächst die Länge sowie der Abstand der Wärmeübertragungsflächen voneinander festgelegt. Danach werden die Schenkel des Strangpreßprofils in dem Bereich, in dem keine Wärmeübertragungsflächen angeordnet sein sollen, entfernt. Das kann beispielsweise durch Stanzen geschehen. Dadurch entsteht ein im wesentlichen rohrförmiger Bereich.

Danach wird der rohrförmige Bereich mit den üblichen Werkzeugen gemäß Vorgabe gebogen. Es entsteht eine Anordnung aus Wärmeübertragungsflächen mit rohrförmigen Leitungen für ein Kühl- oder Heizmedium, die durch gebogene, rohrförmige Bereiche einstückig miteinander verbunden sind.

Es können keine Lecks auftreten, da keinerlei Verbindungen geschaffen werden müssen, die Dichtigkeitsprobleme aufwerfen könnten.

Die Endbereiche des so geschaffenen Wärmetauscherelements können mit üblichen Werkzeugen bearbeitet werden. Beispielsweise können die Enden mit einem Gewinde zur Verschraubung von Schlauchmuffen versehen werden.

Vorzugsweise wird ein Strangpreßprofil aus Aluminium verwendet. Das Strangpreßprofil kann zwei Schenkel aufweisen, die die Wärmeübertragungsflächen bilden.

Es kann vorteilhaft sein, ein asymmetrisches Profil mit einem breiteren und einem schmaleren Schenkel zu verwenden, um optimale Leitungsführungen zu erreichen.

Weiterhin wird erfindungsgemäß ein Wärmetauscherelement, bestehend aus einer Rohrleitung für die Aufnahme eines Kühl- oder Heizmediums und aus voneinander beabstandeten Wärmeübertragungsflächen vorgeschlagen, das dadurch gekennzeichnet ist, daß Rohrleitung und Wärmeübertragungsflächen einstückig aus einem Strangpreßprofil hergestellt sind.

Die Erfindung wird im folgenden anhand der beigefügten Abbildungen, die sich auf Kühlelemente einer Kühldecke beziehen, näher erläutert. Es versteht sich aber von selbst, daß die Erfindung nicht auf Kühldecken beschränkt, sondern auch auf andere Kühl- und Heizvorrichtungen übertragbar ist.
**Fig. 1** zeigt ein verwendbares Strangpreßprofil im Querschnitt;
**Fig. 2** zeigt ein weiteres verwendbares Strangpreßprofil im Querschnitt;
**Fig. 3** zeigt ein erfindungsgemäßes Wärmetauscherelement in Aufsicht.

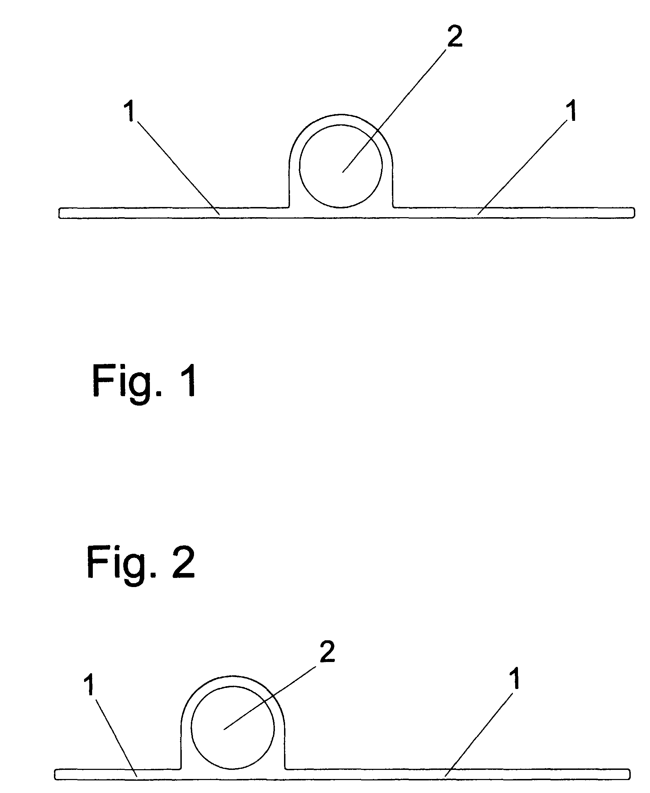

In **Fig. 1** ist ein Strangpreßprofil im Querschnitt dargestellt, das zwei ebene Schenkel 1 und einen geschlossenen, rohrförmigen Bereich 2 aufweist. Das Strangpreßprofil besteht aus Aluminium und kann in beliebiger Länge hergestellt werden.

**Fig. 2** zeigt ein weiteres Beispiel eines verwendbaren Strangpreßprofils, bei dem die Schenkel 1 asymmetrisch ausgeführt sind.

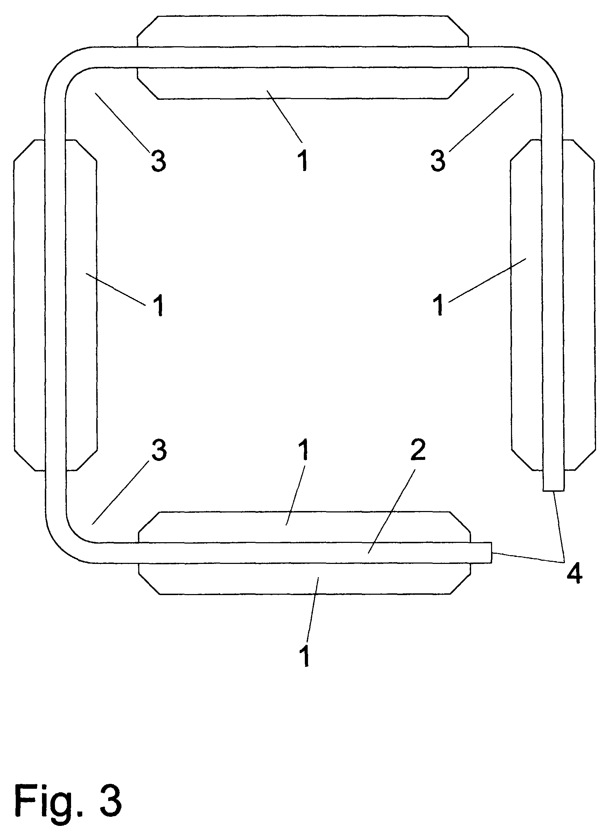

**Fig. 3** zeigt ein erfindungsgemäßes Wärmetauscherelement, das nach dem erfindungsgemäßen Verfahren hergestellt ist. Ein Strangpreßprofil gemäß Fig. 1 wird in der für das Element erforderlichen Gesamtlänge der Rohrleitung 2 hergestellt. In den Bereichen 3, in denen keine Wärmeübertragungsflächen 1 vorgesehen sind, werden die Schenkel 1 des Strangpreßprofils durch Stanzen entfernt. Danach kann das Strangpreßprofil in den verbliebenen rohrförmigen Bereichen gebogen werden.

Die Rohrstutzen 4 für Wasserzu- und -ablauf werden abgedreht und ggf. mit Gewinden versehen, so daß übliche Schläuche oder Steckkupplungen zur Anbringung von Schläuchen angebracht werden können.

Um Korrosionsprobleme bei der Verwendung von Wasser als Kühlmedium zu vermeiden, wird als Füll- und Ergänzungswasser Umkehrosmosewasser in einem geschlossenen Kreislauf verwendet. Zusätzlich wird ein organisches Korrosionsschutzmittel mit anodisch und kathodisch wirkenden Inhibitoren verwendet.

## Patentansprüche

1. Herstellungsverfahren zur Herstellung von Wärmetauscherelementen, insbesondere für Kühl- und Heizdecken, mit Wärmeübertragungsflächen (1), kühl- oder heizmediumführenden Leitungen (2) und rohrförmigen, gebogenen Bereichen (3), mit folgenden Schritten:
a) Herstellung eines Strangpreßprofils mit mindestens einem ebenen Schenkel (1) als Wärmeübertragungsfläche und einem geschlossenen rohrförmigen Bereich (2) zur Aufnahme eines Kühl- oder Heizmediums;
b) Festlegung der Länge und des Abstandes der Wärmeübertragungsflächen (1);
c) Entfernen der Schenkel (1) des Stragpreßprofils im Bereich (4) zwischen den Wärmeübertragungsflächen;
d) Biegen des verbleibenden Rohres im Bereich (3) zwischen den Wärmeübertragungsflächen.

2. Herstellungsverfahren gemäß Anspruch 1, **dadurch gekennzeichnet**, daß ein Aluminium-Strangpreßprofil verwendet wird.

3. Herstellungsverfahren nach Anspruch 1 oder 2, **dadurch gekennzeichnet**, daß ein Strangpreßprofil mit zwei Schenkeln (1) verwendet wird.

4. Herstellungsverfahren nach einem der Ansprüche 1 bis 3, **dadurch gekennzeichnet**, daß ein asymmetrisches Strangpreßprofil verwendet wird.

5. Wärmetauscherelement, bestehend aus einer Rohrleitung (2) für die Aufnahme eines Kühl- oder Heizmediums und aus voneinander beabstandeten Wärmeübertragungsflächen (1), **dadurch gekennzeichnet**, daß Rohrleitung (2) und Wärmeübertragungsflächen (1) einstückig aus einem Strangpreßprofil hergestellt sind.

6. Wärmetauscherelement nach Anspruch 5, **dadurch gekennzeichnet**, daß es aus Aluminium besteht.
